# EUROPÄISCHE PATENTSCHRIFT

(11) **EP 1 836 070 B1**
(45) Veröffentlichungstag und Bekanntmachung des Hinweises auf die Patenterteilung: **10.12.2008**
(21) Anmeldenummer: 05815814.8
(22) Anmeldetag: 13.12.2005
(51) Int. Cl.: B60N 2/44, B60N 2/22

(54) **FAHRZEUGSITZ**
VEHICLE SEAT
SIEGE DE VEHICULE

(30) Priorität: 15.01.2005 DE 102005001960
(43) Veröffentlichungstag der Anmeldung: 26.09.2007
(73) Patentinhaber: Daimler AG, 70327 Stuttgart (DE)
(72) Erfinder: FISCHER, Karl-Heinz, 73733 Esslingen (DE); HÖLZEL, Günter, 73269 Hochdorf (DE); SCHMIDT-SPALDING, Helge, 24536 Neumünster (DE)
(74) Vertreter: Wagner, Jürgen
(86) Internationale Anmeldenummer: PCT/EP2005/013351
(87) Internationale Veröffentlichungsnummer: WO 2006/074780

(56) Entgegenhaltungen:
- EP-A- 0 107 627
- EP-A- 0 537 839
- DE-A1- 3 707 926
- DE-A1- 3 910 143
- DE-U1- 9 006 316
- FR-A- 2 602 133

## Beschreibung

Die Erfindung betrifft einen Fahrzeugsitz mit einer Rückenlehne der im Oberbegriff des Patentanspruchs 1 angegebenen Art.

Die FR 2 602 133 A, die dem Oberbegriff des Anspruchs 1 entspricht, zeigt einen dynamischen Sitzrahmen für ein Fahrzeug, welcher einen Lehnengrundkörper aufweist, dessen Neigung sich der Beschleunigung und den Wünschen des Insassen anpassen lässt. Dabei umfasst dieser Fahrzeugsitz eine Sitztragstruktur und einen Lehnenrahmen, der an den Enden zwei Lagerungen aufweist, an den der Lehnengrundkörper drehbar gelagert, so dass er um eine horizontale Achse verschwenken kann.

Als nachteilig bei einem derartigen Sitz ist jedoch der Umstand anzusehen, dass weitere Anpassungen beispielsweise auf die Körpergröße des Insassen nicht möglich sind.

Aus dem deutschen Gebrauchsmuster DE 90 06 316 U1 ist ein Sitz mit zwei seitlich angeordneten Rückenschalen bekannt, die an einer gemeinsamen Querschiene über jeweils eine Blattfeder mit einer Windung befestigt sind. Aus der europäischen Patentschrift EP 0 107 627 B1 ist ein Sessel mit einem Sitz und einer Rückenlehne bekannt, die aus einer aufgerichteten Stellung relativ zum Sitz eine teilweise umgelegte Stellung einnehmen kann. Der bekannte Sessel ist unter anderem **dadurch gekennzeichnet, dass** die Rückenlehne aus einer Reihe von zumindest drei übereinander angeordneten Segmenten gebildet wird, die um entsprechende horizontale Achsen miteinander gelenkig verbunden und so angeordnet sind, dass sie in der teilweise umgelegten Stellung der Rückenlehne eine Kurve mit einer Krümmung bilden, die im Wesentlichen der Krümmung des gebogenen Rückens eines Benutzers entspricht. Aus der europäischen Patentschrift EP 0 537 839 B1 ist ein Stützglied für Sitze bekannt, das zwei plattenartige Seitenkörper und einen im allgemeinen flexiblen, verbindenden Zwischenkörper umfasst, der sich brückenartig zwischen den innen liegenden Enden der Seitenkörper erstreckt. Die vorstehend beschriebenen Sitzkonstruktionen sind für den Einsatz in Kraftfahrzeugen eher ungeeignet. Aus der deutschen Patentschrift DE 37 07 926 C2 ist ein Fahrzeugsitz mit einer Rückenlehne bekannt, die als tragendes Bauelement eine Formschale mit Mittelteil und damit einstückigen, nach vorne seitlich wegstrebenden Seitenführungsteilen aufweist. Die Formschale ist etwa der Rückenbreite eines mittleren bis großen Sitzbenutzers angepasst. Die Seitenführungsteile sind gegenüber dem Mittelteil federnd verschwenkbar ausgebildet und derart an einem im Wesentlichen biegesteifen Lehnenrahmen aufgehängt, dass bei Personen, die schmaler sind als die konstruktiv vorgegebene Breite der Formschale, sich die Seitenführungsteile unter Rückverlagerung des Mittelteils aufeinander zu bewegen. Aus der deutschen Patentschrift DE 39 10 143 C2 ist ein Kraftfahrzeugsitz mit einer Rückenlehne und einem Paar Seitenstützen bekannt, die über entsprechende Schwenkwellen mit beiden Seiten der Rückenlehne schwenkbar verbunden sind.

Aufgabe der Erfindung ist es, einen Fahrzeugsitz der eingangs genannten Art zu schaffen, mit welchem weitere Anpassungen beispielsweise auf die Körpergröße des Insassen möglich sind.

Diese Aufgabe wird erfindungsgemäß durch einen Fahrzeugsitz mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Die Rückenlehne ist an ihrem der Sitzfläche zugewandten Ende an die Sitztragstruktur angelenkt. Dadurch wird ein Verstellen der Neigung oder ein Umklappen der Rückenlehne ermöglicht. Im Betrieb wird die Rückenlehne, bezogen auf die Anlenkung an dem der Sitzfläche zugewandten Ende, fixiert. Um ein aktives Sitzen zu ermöglichen, ist die Rückenlehne um die horizontale Drehachse, die vorzugsweise auf Höhe der oberen Beckenrandabstützung angeordnet ist, frei beziehungsweise gegen die Vorspannkraft mindestens einer Federeinrichtung um einen begrenzten Verdrehwinkel drehbar. Dadurch wird ein häufiger Wechsel der Belastung der Bandscheiben ermöglicht. Durch die Lagerung des Lehnengrundkörpers in dem Lehnenrahmen wird eine stabile Lagerung des Lehnengrundkörpers ermöglicht, die auch bei hohen Querbeschleunigungskräften, wie sie im Betrieb eines Kraftfahrzeugs auftreten, ein aktives Sitzen ermöglicht.

Erfindungsgemäß ist der Fahrzeugsitz **dadurch gekennzeichnet, dass** die zwei Lagereinrichtungen an jeweils einer an dem Lehnenrahmen angebrachten Führungsschiene in Längsrichtung der Rückenlehne verschiebbar geführt sind. Dadurch wird auf einfache Art und Weise eine Höhenverstellung der horizontalen Drehachse ermöglicht.

Ein weiteres bevorzugtes Ausführungsbeispiel des Fahrzeugsitzes ist **dadurch gekennzeichnet, dass** oberhalb der beiden Lagereinrichtungen zwei weitere Lagereinrichtungen für den Lehnengrundkörper an dem Lehnenrahmen angebracht sind, die jeweils ein Drehbegrenzungselement aufweisen, das in einem Langloch geführt ist. Dadurch wird der Verdrehwinkel des Lehnengrundkörpers relativ zu dem Lehnenrahmen um die horizontale Drehachse begrenzt. Vorzugsweise ist der Lehnengrundkörper durch mindestens eine Federeinrichtung in eine mittlere Lage vorgespannt.

Ein weiteres bevorzugtes Ausführungsbeispiel des Fahrzeugsitzes ist **dadurch gekennzeichnet, dass** die Rückenlehne in Längsrichtung geteilt ist und zwei Lehnenschalen aufweist, die an mehreren im Wesentlichen horizontal verlaufenden Haltearmen angebracht sind. Die beiden Lehnenschalen ermöglichen eine gleichmäßige Umschließung des Oberkörpers und der Taille einer auf dem Fahrzeugsitz sitzenden Person.

Ein weiteres bevorzugtes Ausführungsbeispiel des Fahrzeugsitzes ist **dadurch gekennzeichnet, dass** die Haltearme ein unteres, ein oberes und ein mittleres Haltearmpaar umfassen, das in Längsrichtung der Rückenlehne betrachtet zwischen dem unteren und dem oberen Haltearmpaar angeordnet ist. Die drei Haltearmpaare ermöglichen eine individuelle Verstellung der Lehnenschalen, ohne die Stabilität der Lagerung zu beeinträchtigen.

Ein weiteres bevorzugtes Ausführungsbeispiel des Fahrzeugsitzes ist **dadurch gekennzeichnet, dass** an den Haltearmen des unteren und des oberen Haltearmpaares jeweils ein Tragarm in Längsrichtung der Haltearme verschiebbar geführt ist. Dadurch wird eine Verschiebung der Lagerschalen quer zueinander ermöglicht.

Ein weiteres bevorzugtes Ausführungsbeispiel des Fahrzeugsitzes ist **dadurch gekennzeichnet, dass** an den Enden der Tragarme des unteren und des oberen Haltearmpaares jeweils ein Befestigungselement angelenkt ist. Durch die Anlenkstellen der Befestigungselemente werden im Wesentlichen vertikal verlaufende Drehachsen definiert, um welche die Lagerschalen zu Verstellzwecken verdrehbar sind. Dadurch wird eine individuelle Verstellung der Lagerschalen ermöglicht.

Ein weiteres bevorzugtes Ausführungsbeispiel des Fahrzeugsitzes ist **dadurch gekennzeichnet, dass** in den Haltearmen des mittleren Haltearmpaares jeweils ein Führungsschuh in Längsrichtung der Haltearme verschiebbar geführt ist, an den ein Hebelarm angelenkt ist. Die Führungsschuhe ermöglichen die Verschiebung der Lagerschalen quer zueinander.

Ein weiteres bevorzugtes Ausführungsbeispiel des Fahrzeugsitzes ist **dadurch gekennzeichnet, dass** an den Enden der Hebelarme jeweils ein Befestigungselement angelenkt ist. Dadurch wird eine definierte Verdrehung der Lagerschalen um die vertikal verlaufenden Drehachsen ermöglicht.

Ein weiteres bevorzugtes Ausführungsbeispiel des Fahrzeugsitzes ist **dadurch gekennzeichnet, dass** die Haltearme eines Haltearmpaares in einem stumpfen Winkel zueinander angeordnet sind. Vorzugsweise sind die Haltearmpaare jeweils fest mit dem Lehnengrundkörper verbunden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Dabei zeigen:
- Fig. 1: eine perspektivische Darstellung eines erfindungsgemäßen Fahrzeugsitzes von der Seite;
- Fig. 2: den Fahrzeugsitz aus Figur 1 vorn vorne;
- Fig. 3: den Fahrzeugsitz aus Figur 1 schräg vorn vorne;
- Fig. 4: eine perspektivische Darstellung des Innenaufbaus eines erfindungsgemäßen Fahrzeugsitzes schräg von vorne;
- Fig. 5: den Innenaufbau aus Figur 4 von vorne und
- Fig. 6: den Innenaufbau aus den Figuren 4 und 5 schräg von oben.

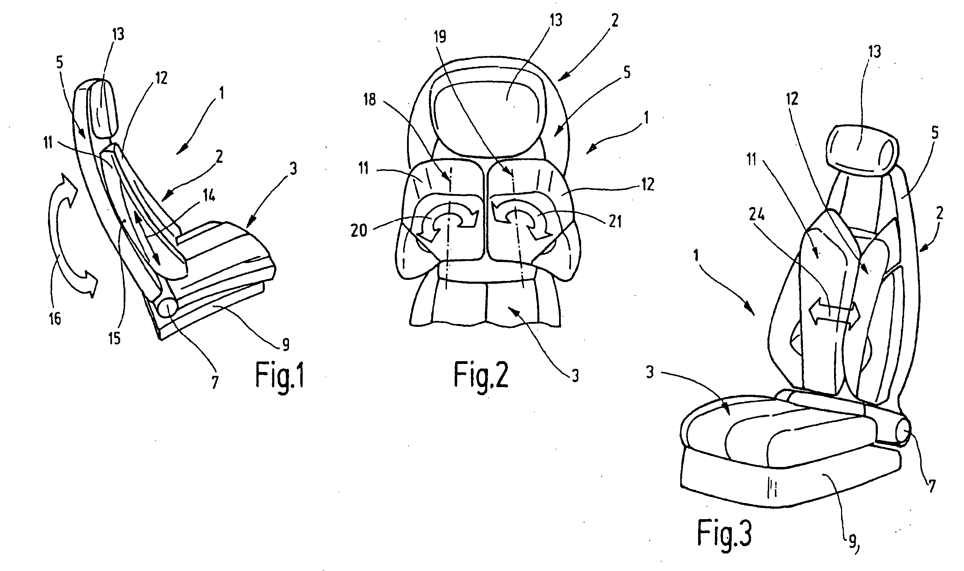

In den Figuren 1 bis 3 ist ein erfindungsgemäßer Fahrzeugsitz 1 in verschiedenen Ansichten perspektivisch dargestellt. Der Fahrzeugsitz 1 weist eine Rückenlehne 2 und eine Sitzfläche 3 auf. Die Rückenlehne 2 umfasst einen Lehnenrahmen 5, der um eine Drehachse 7 schwenkbar an einer Sitztragstruktur 9 angebracht ist, an der auch die Fahrzeugsitzfläche 3 angebracht ist. Die Rückenlehne 2 ist in zwei Lehnenschalen 11, 12 unterteilt, die an dem Lehnenrahmen 5 angebracht sind. Außerdem ist an dem Lehnenrahmen 5 eine Kopfstütze 13 befestigt.

In Figur 1 ist durch einen Doppelpfeil 14 angedeutet, dass die Lehnenschalen 11, 12 in Längsrichtung des Lehnenrahmens 5 verschiebbar sind. Eine Verschiebung der Lehnenschalen 11, 12 in Richtung des Doppelpfeils 14 dient dazu, die Rückenlehnen 2 an die Gestalt eines Fahrzeuginsassen anzupassen. Darüber hinaus ist in Figur 1 angedeutet, dass die Lehnenschalen 11, 12 um eine Drehachse 15 begrenzt verschwenkbar sind, wie durch einen Doppelpfeil 16 angedeutet ist. Ein Verschwenken der Lehnenschalen 11, 12 um die Drehachse 15 erfolgt vorzugsweise gegen die Vorspannkraft von mindestens einer (nicht dargestellten) Federeinrichtung.

In Figur 2 ist angedeutet, dass die Lehnenschalen 11, 12 des Weiteren um zwei Drehachsen 18, 19 drehbar sind. Die entsprechende Bewegung der Lehnenschalen 11, 12 um die Drehachsen 18, 19 ist durch Doppelpfeile 21, 22 angedeutet.

In Figur 3 ist durch einen Doppelpfeil 24 angedeutet, dass die beiden Lehnenschalen 11, 12 auch quer zueinander verschiebbar an dem Lehnenrahmen 5 angebracht sind. Die Bewegung der Lehnenschalen 11, 12 in Richtung des Doppelpfeils 24 erfolgt, ebenso wie die Bewegung der Lehnenschalen 11, 12 in Richtung der Doppelpfeile 20, 21 (siehe Figur 2), zu Verstellzwecken.

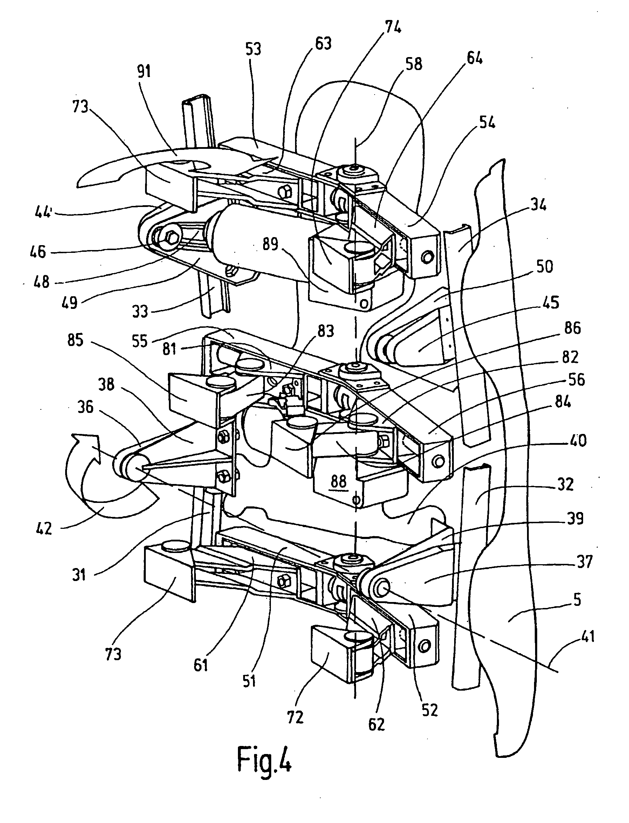

In den Figuren 4 bis 6 ist der innere Aufbau des in den Figuren 1 bis 3 vereinfacht dargestellten Fahrzeugsitzes 1 in verschiedenen Ansichten perspektivisch dargestellt. In Figur 4 ist der Lehnenrahmen 5 aus Gründen der Übersichtlichkeit nur schematisch ausschnittsweise dargestellt. Der Lehnenrahmen 5 kann geschlossen oder offen, zum Beispiel U-förmig, ausgebildet sein. An dem Lehnenrahmen 5 sind vier Führungsschienen 31, 32, 33, 34 befestigt. Die Führungsschienen 31 bis 34 sind im Wesentlichen in Längsrichtung der Rückenlehne angeordnet. Die beiden Führungsschienen 31, 32 sind in der unteren Hälfte der Rückenlehne an zwei gegenüberliegenden Seiten angeordnet und bilden ein unteres Führungsschienenpaar. Die beiden Führungsschienen 33, 34 sind in der oberen Hälfte der Rückenlehne an zwei gegenüberliegenden Seiten angeordnet und bilden ein oberes Führungsschienenpaar.

An den Führungsschienen 31, 32 ist jeweils ein Lagerbock 36, 37 in Längsrichtung verschiebbar geführt. Ein Lagerbock 36, 37 bildet zusammen mit einer Lagerstütze 38, 39 jeweils eine Lagereinrichtung für einen Lagergrundkörper. Die Lagerstützen 38, 39 sind an dem Lagergrundkörper 40 befestigt. Die Befestigung erfolgt vorzugsweise lösbar, zum Beispiel durch Schraubverbindungen. Die jeweils von einem Lagerbock 36, 37 und einer Lagerstütze 38, 39 gebildeten Lagereinrichtungen ermöglichen ein Verdrehen des Lehnengrundkörpers 40 um eine Drehachse 41. Durch einen Pfeil 42 ist eine Drehbewegung des Lehnengrundkörpers 40 um die Drehachse 41 angedeutet. Selbstverständlich kann die Drehung des Lehnengrundkörpers 40 in beiden Drehrichtungen um die Drehachse 41 herum erfolgen.

An den Führungsschienen 33, 34 ist jeweils ein Lagerbock 44, 45 in Längsrichtung verschiebbar geführt. Von dem freien Ende der Lagerböcke 44, 45 steht nach innen jeweils ein Führungselement ab. Bei dem Lagerbock 44 sieht man, dass das Führungselement von einem Schraubenbolzen 46 gebildet wird, der mit einem Ende an dem Lagerbock 44 befestigt ist. Der Schraubenbolzen 46 kann zum Beispiel in eine entsprechend ausgebildete Gewindebohrung in dem Lagerbock 44 eingeschraubt sein. An dem anderen Ende des Schraubenbolzens 46 ist ein Schraubenkopf vorgesehen. Der Schraubenbolzen 46 erstreckt sich durch ein Langloch 48, das in einer Lagerstütze 49 ausgespart ist. Die Lagerstütze 49 und eine spiegelbildlich analog ausgebildete Lagerstütze 50 sind an dem Lehnengrundkörper 40 befestigt. Durch die Langlöcher in den Lagerstützen 49, 50 wird der Verdrehwinkel beim Verdrehen des Lehnengrundkörpers 40 um die Drehachse 41 begrenzt.

An dem Lehnengrundkörper 40 sind zusätzlich zu den Lagerstützen 38, 39, 49, 50 sechs Haltearme 51 bis 56 befestigt. Die Haltearme 51 bis 56 sind paarweise horizontal und in einem stumpfen Winkel von etwa 160 Grad zueinander angeordnet. Die Haltearme 51, 52 bilden ein unteres Haltearmpaar. Die Haltearme 53, 54 bilden ein oberes Haltearmpaar. Zwischen den Haltearmpaaren 51, 52 und 53, 54 ist ein mittleres Haltearmpaar angeordnet, das von den Haltearmen 55, 56 gebildet wird. Die Haltearme 51 bis 56 sind so angeordnet, dass sie paarweise im Bereich einer Mittelachse 58 aneinander anstoßen. Im Bereich der Stoßstelle sind sie an dem Lehnengrundkörper 40 befestigt.

In den Haltearmen 51 bis 54 ist jeweils ein Ende eines Tragarms 61 bis 64 in Längsrichtung der Haltearme verschiebbar geführt. An die freien Enden der Tragarme 61 bis 64 ist jeweils ein Befestigungselement 71 bis 74 angelenkt. Die Befestigungselemente 71 bis 74 dienen zur Befestigung von (in Figur 4 nicht dargestellten) Lehnenschalen.

In den Haltearmen 55, 56 ist jeweils ein Führungsschuh 81, 82 in Längsrichtung der Haltearme verschiebbar geführt. An die Führungsschuhe 81, 82 ist jeweils ein Ende eines Hebelarms 83, 84 angelenkt. An das andere Ende der Hebelarme 83,84 ist jeweils ein Befestigungselement 85, 86 angelenkt.

Die Befestigungselemente 71, 73, 85 dienen zur Befestigung einer ersten Lehnenschale. Die Befestigungselemente 72, 74, 86 dienen zur Befestigung einer zweiten Lehnenschale. Durch eine Verschiebung der Führungsschuhe 81, 82 in den Haltearmen 55, 56 ist es möglich, die Lehnenschalen zu verdrehen, wie auf der linken Seite in Figur 4 durch einen Pfeil 91 angedeutet ist. Voraussetzung für eine derartige Verdrehung der Lehnenschalen ist, dass die Tragarme 61 bis 64 ihre Position relativ zu den zugeordneten Haltearmen 51 bis 54 beibehalten.

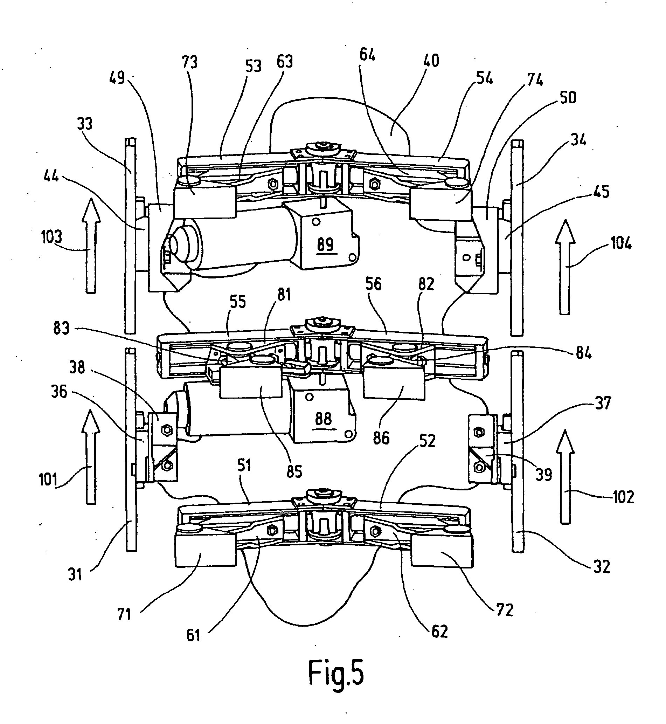

In Figur 5 ist durch Pfeile 101 bis 104 angedeutet, dass der Lehnengrundkörper 40 mit den daran befestigten Haltearmen 51 bis 56 in der Höhe verschiebbar ist. Durch eine derartige Verschiebung, die selbstverständlich in beiden Richtungen erfolgen kann, kann insbesondere die Höhe der horizontalen Drehachse (41 in Figur 4) verstellt werden.

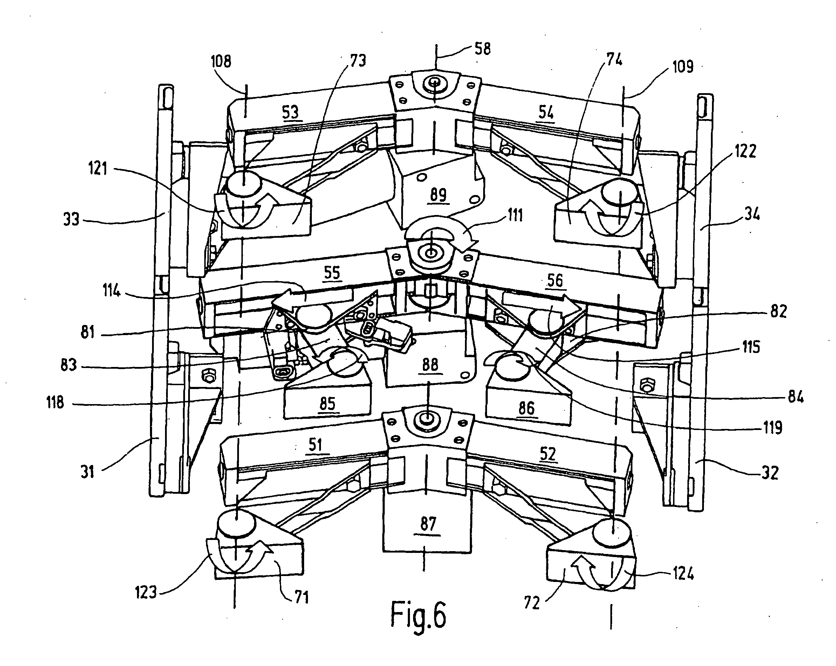

Anhand der Figur 6 wird im Folgenden das Verschwenken der Lehnenschalen um vertikale Drehachsen 108, 109 erläutert. Unterhalb der Verbindungsstellen der Haltearmpaare 51, 52; 55, 56; 53, 54 ist jeweils ein Motor 87; 88; 89 mit einer zugehörigen Getriebeeinrichtung angeordnet. Durch die Motoren 87 bis 89 kann jeweils eine einem Haltearm zugeordnete Motorwelle um die mittlere Achse 58 verdreht werden. Die Drehbewegung der Motorwelle wird mit Hilfe von Kegelrädern und Spindeln auf die Tragarme 61 bis 64 beziehungsweise die Führungsschuhe 81, 82 übertragen.

So führt zum Beispiel ein Verdrehen der dem Motor 88 zugeordneten Motorwelle in Richtung eines Pfeils 111 dazu, dass sich die Führungsschuhe 81, 82 in den Haltearmen 55, 56 nach außen verschieben, wie durch Pfeile 114, 115 angedeutet ist. Diese Bewegung wiederum führt dazu, dass sich die Befestigungselemente 85, 86 mit den daran befestigten Lehnenschalen in Richtung von Pfeilen 118, 119 verdrehen. Diese Bewegungen wiederum führen dazu, dass die Befestigungselemente 71 bis 74 sich zusammen mit den daran befestigten Lehnenschalen um die Drehachsen 108, 109 verdrehen, wie durch Pfeile 121 bis 124 angedeutet ist.

## Patentansprüche

1. Fahrzeugsitz mit einer Rückenlehne (2),
- die einen Lehnenrahmen (5) aufweist, der an einer Sitztragstruktur (9) angebracht ist,
- und die um eine horizontale Drehachse (15;41) begrenzt verschwenkbar ist, um ein aktives Sitzen zu ermöglichen,
wobei an dem Lehnenrahmen (5) zwei Lagereinrichtungen (36-39) angebracht sind, an denen ein Lehnengrundkörper (40) um die horizontale Drehachse (41) drehbar gelagert ist,
**dadurch gekennzeichnet, dass**
die zwei Lagereinrichtungen (36-39) an jeweils einer an dem Lehnenrahmen (5) angebrachten Führungsschiene (31,32) in Längsrichtung der Rückenlehne (2) verschiebbar geführt sind.

2. Fahrzeugsitz nach Anspruch 1,
**dadurch gekennzeichnet, dass**
oberhalb der beiden Lagereinrichtungen (36-39) zwei weitere Lagereinrichtungen (44,45,49,50) für den Lehnengrundkörper (40) an dem Lehnenrahmen (5) angebracht sind, die jeweils ein Drehbegrenzungselement (46) aufweisen, das in einem Langloch (48) geführt ist.

3. Fahrzeugsitz nach einem der vorhergehenden Ansprüche,
**dadurch gekennzeichnet, dass**
die Rückenlehne (2) in Längsrichtung geteilt ist und zwei Lehnenschalen (11,12) aufweist, die an mehreren im Wesentlichen horizontal verlaufenden Haltearmen (51-56) angebracht sind.

4. Fahrzeugsitz nach Anspruch 3,
**dadurch gekennzeichnet, dass**
die Haltearme (51-56) ein unteres, ein oberes und ein mittleres Haltearmpaar umfassen, das in Längsrichtung der Rückenlehne (2) betrachtet zwischen dem unteren und dem oberen Haltearmpaar angeordnet ist.

5. Fahrzeugsitz nach Anspruch 4,
**dadurch gekennzeichnet, dass**
an den Haltearmen (51-54) des unteren und des oberen Haltearmpaares jeweils ein Tragarm (61-64) in Längsrichtung der Haltearme verschiebbar geführt ist.

6. Fahrzeugsitz nach Anspruch 5,
**dadurch gekennzeichnet, dass**
an die Enden der Tragarme (51-54) des unteren und des oberen Haltearmpaares jeweils ein Befestigungselement (71-74) angelenkt ist.

7. Fahrzeugsitz nach einem der Ansprüche 4 bis 6,
**dadurch gekennzeichnet, dass**
an den Haltearmen des mittleren Haltearmpaares jeweils ein Führungsschuh (81,82) in Längsrichtung der Haltearme (55,56) verschiebbar geführt ist, an den ein Hebelarm (83,84) angelenkt ist.

8. Fahrzeugsitz nach Anspruch 7,
**dadurch gekennzeichnet, dass**
an die Enden der Hebelarme (83,84) jeweils ein Befestigungselement (85,86) angelenkt ist.

9. Fahrzeugsitz nach einem der Ansprüche 4 bis 8,
**dadurch gekennzeichnet, dass**
die Haltearme (51-56) eines Haltearmpaares in einem stumpfen Winkel zueinander angeordnet sind.

## Claims

1. Vehicle seat with a backrest (2),
- which comprises a backrest frame (5) attached to a seat support structure (9),
- and which can pivot about a horizontal pivot axis (15; 41) to a limited extent in order to enable active sitting,
such that two bearing devices (36 - 39) are attached to the backrest frame (5), on which a main backrest body (40) is mounted to pivot about the pivot axis (41),
**characterised in that**
the two bearing devices (36 - 39) are in each case guided on respective guide rails (31, 32) which are attached to the backrest frame (5) and are able to move in the longitudinal direction of the backrest (2).

2. Vehicle seat according to Claim 1,
**characterised in that**
above the two bearing devices (36 - 39) two further bearing devices (44, 45, 49, 50) for the main backrest body (40) are attached to the backrest frame (5), each comprising a pivoting restriction element (46) which is guided in a slot (48).

3. Vehicle seat according to either of the preceding claims,
**characterised in that**
the backrest (2) is divided in the longitudinal direction and has two backrest shells (11, 12), which are attached to a plurality of holding arms (51 - 56) that extend substantially horizontally.

4. Vehicle seat according to Claim 3,
**characterised in that**
the holding arms (51 - 56) include a lower, an upper and a middle pair of holding arms, such that viewed in the longitudinal direction of the backrest (2), the middle pair is arranged between the lower and the upper pair of holding arms.

5. Vehicle seat according to Claim 4,
**characterised in that**
on the holding arms (51 - 56) of the lower and upper pairs of arms, in each case a supporting arm (61 - 64) is guided and can move in the longitudinal direction of the holding arms.

6. Vehicle seat according to Claim 5,
**characterised in that**
to the ends of the supporting arms (51 - 54) of the lower and upper pairs of holding arms are in each case articulated respective fixing elements (71 - 74).

7. Vehicle seat according to any of Claims 4 to 6,
**characterised in that**
on the holding arms of the middle pair of holding arms, in each case a respective guide shoe (81, 82) which can move in the longitudinal direction of the holding arms (55, 56) is fitted, to which a lever arm (83, 94) is articulated.

8. Vehicle seat according to Claim 7,
**characterised in that**
to the ends of the lever arms (83, 84) are articulated respective fixing elements (85, 86).

9. Vehicle seat according to any of Claims 4 to 8,
**characterised in that**
the holding arms (51 - 56) of a holding arm pair are arranged at an oblique angle to one another.

## Revendications

1. Siège de véhicule avec un dossier (2),
■ qui présente un cadre de dossier (5) qui est monté sur une structure porteuse de siège (9),
■ et qui peut être pivoté de manière limitée autour d'un axe de rotation (15 ; 41) horizontal afin de permettre une assise active,
dans lequel deux ensembles de palier (36-39) sont montés sur le cadre de dossier (5), sur lesquels est logé à rotation un corps de base de dossier (40) autour de l'axe de rotation (41) horizontal,
**caractérisé en ce que**
les deux ensembles de palier (36-39) sont guidés en déplacement sur respectivement un rail de guidage (31, 32) monté sur le cadre de dossier (5) dans le sens longitudinal du dossier (2).

2. Siège de véhicule selon la revendication 1, **caractérisé en ce que** au-dessus des deux ensembles de palier (36-39) sont montés deux autres ensembles de palier (44, 45, 49, 50) pour le corps de base de dossier (40) sur le cadre de dossier (5), lesquels présentent respectivement un élément de limitation de rotation (46) qui est guidé dans un trou oblong (48).

3. Siège de véhicule selon l'une quelconque des revendications précédentes, **caractérisé en ce que** le dossier (2) est scindé dans le sens longitudinal et présente deux coques de dossier (11, 12) qui sont montées sur plusieurs bras de support (51-56) s'étendant sensiblement horizontalement.

4. Siège de véhicule selon la revendication 3, **caractérisé en ce que** les bras de support (51-56) comportent une paire de bras de support inférieure, une paire de bras de support supérieure et une paire de bras de support médiane qui est disposée, considérée dans le sens longitudinal du dossier (2), entre la paire de bras de support inférieure et la paire de bras de support supérieure.

5. Siège de véhicule selon la revendication 4, **caractérisé en ce que** respectivement un bras porteur (61-64) est guidé en déplacement dans le sens longitudinal des bras de support sur les bras de support (51-54) de la paire de bras de support inférieure et de la paire de bras de support supérieure.

6. Siège de véhicule selon la revendication 5, **caractérisé en ce que** respectivement un élément de fixation (71-74) est articulé sur les extrémités des bras porteurs (51-54) de la paire de bras de support inférieure et de la paire de bras de support supérieure.

7. Siège de véhicule selon l'une quelconque des revendications 4 à 6, **caractérisé en ce que** respectivement une griffe de guidage (81, 82) est guidée en déplacement dans le sens longitudinal des bras de support (55, 56) sur les bras de support de la paire de bras de support médiane, sur laquelle est articulé un bras de levier (93, 84).

8. Siège de véhicule selon la revendication 7, **caractérisé en ce que** respectivement un élément de fixation (85, 86) est articulé sur les extrémités des bras de levier (83, 84).

9. Siège de véhicule selon l'une quelconque des revendications 4 à 8, **caractérisé en ce que** les bras de support (51-56) d'une paire de bras de support sont disposés dans un angle obtus les uns par rapport aux autres.
